# EUROPEAN PATENT SPECIFICATION

(11) **EP 3 070 625 B1**
(45) Date of publication and mention of the grant of the patent: **12.06.2019**
(21) Application number: 16161312.0
(22) Date of filing: 21.03.2016
(51) Int. Cl.: G06F 17/30

(54) **IMAGE-RECOGNITION-BASED GUIDANCE FOR NETWORK DEVICE CONFIGURATION AND OTHER ENVIROMENTS**
BILDERKENNUNGSBASIERTE FÜHRUNG ZUR NETZWERKVORRICHTUNGSKONFIGURATION UND ANDERER UMGEBUNGEN
GUIDAGE SUR RECONNAISSANCE D'IMAGE POUR CONFIGURATION DE DISPOSITIF DE RÉSEAU ET D'AUTRES ENVIRONNEMENTS

(30) Priority: 19.03.2015 IN 1358CH2015
(43) Date of publication of application: 21.09.2016
(73) Proprietor: Accenture Global Services Limited, Dublin 4 (IE)
(72) Inventor: RAJAPPA, Anuroop, 30328 Atlanta, GA (IN); SAH, Manvendra Kumar, 400708 Navi Mumbai (IN); KOLARATH, Julesh, 560066 Whitefield, Bangalore (IN)
(74) Representative: Müller-Boré & Partner Patentanwälte PartG mbB

(56) References cited:
- US-A1- 2011 150 292
- US-A1- 2013 083 977
- US-B1- 8 810 599

## Description

### BACKGROUND

In today's environments, most computers and devices may be connected to the Internet or another network. Furthermore, the Internet of Things (loT) has obtained peak hype as potentially providing the interconnection of devices, vehicles, buildings and other items embedded with electronics, software, sensors, and the ability to interconnect via a network to collect and exchange data for advanced processing. Configuring computers and devices to connect to a network is not always a simple task, and in many instances a user with minimal networking experience may be tasked with configuring these devices and computers. Additionally, in many other situations, users with networking experience may have difficulty in configuring computers and network devices. For example, in a data center environment, network administrators may be responsible for monitoring, configuring, and maintaining racks of network equipment, which can be daunting regardless of the level of expertise of the network administrator. In certain instances, guidance for configuring devices or computers may be available on a website or may be provided by another person or administrator. However, guidance may not be available for the current device or for a particular configuration that is to be performed, or the guidance may not be available in real-time. Furthermore, field technicians in the telecommunications industry regularly install, repair and maintain multiple systems like broadband, digital television systems, mobile phone networks, landline networks, fiber optic systems, etc. The technicians commonly spend a significant amount diagnosing and rectifying device failures and other technical problems. In many instances, if they are unable to properly configure equipment or otherwise rectify system failures, telecommunication service interruptions may be extended.

Document US 2011/0150292 A1 relates to deriving object information from object images. Search terms are derived automatically from images captured by a camera equipped cell phone, PDA, or other image capturing device, submitted to a search engine to obtain information of interest, and at least a portion of the resulting information is transmitted back locally to, or nearby, the device that captured the image.

Document US 2013/0083977 A1 discloses a system which includes receiving first information about a device, where the first information includes data corresponding to a location of the device and a time at which the device was at the location; identifying one or more images associated with second information that is within a range of the first information, where the second information for an image includes data corresponding to a location at which the image was captured and a time at which the image was captured, and where the location at which the image was captured and a time at which the image was captured are within a range of the location of the device and the time at which the device was at the location; and retrieving the one or more images associated with the second information.

Document US 8,810,599 B1 discloses a computer-implemented augmented reality method which includes obtaining an image acquired by a computing device running an augmented reality application, identifying image characterizing data in the obtained image, the data identifying characteristic points in the image, comparing the image characterizing data with image characterizing data for a plurality of geo-coded images stored by a computer server system, identifying locations of items in the obtained image using the comparison, and providing, for display on the computing device at the identified locations, data for textual or graphical annotations that correspond to each of the items in the obtained image, and formatted to be displayed with the obtained image or a subsequently acquired image.

### SUMMARY OF THE INVENTION

The invention is defined by an audiovisual content server, a user device, and a computer-implemented method to provide guidance information for technicians according to the independent claims. Preferred embodiments are defined in the dependent claims.

### BRIEF DESCRIPTION OF DRAWINGS

Features of the present disclosure are illustrated by way of examples shown in the following figures. In the following figures, like numerals indicate like elements, in which:
FIG. 1 illustrates an environment including an audiovisual content server, according to an example of the present disclosure;
FIG. 2 illustrates computers in the environment, according to an example of the present disclosure;
FIGS. 3-4 show operations and communications between a user device 201 and the audiovisual content server, according to examples of the present disclosure;
FIGS. 5A-6C illustrate screenshots for an application, according to examples of the present disclosure;
FIG. 7 illustrates a method for real-time audiovisual guidance performed by a server, according to an example of the present disclosure; and
FIG. 8 illustrates a method for real-time audiovisual guidance performed by a user device, according to an example of the present disclosure.

### DETAILED DESCRIPTION

For simplicity and illustrative purposes, the present disclosure is described by referring mainly to examples thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

An audiovisual content server is disclosed herein to provide a real-time audio and/or visual content to a user device (e.g., laptop, desktop, computing glasses, smartphone, or any type of computer) or another computer based on image recognition of objects provided in images. The real-time audio and/or visual content, for example, provides guidance or information about an object captured in the image. In an example, the object is a computer or network device, and the content may include guidance for configuring the computer or network device. In other examples, the object may include anything of interest to the user, ranging from a building, a machine, a work of art or an artifact, to a living thing, a site having historical, cultural, entertainment or educational significance, etc. The content provided by the object may include any information related to the object that may be of interest or useful to the user.

The disclosed audiovisual content server may provide an application that integrates a framework (e.g., software development kit (SDK)) to enable an image to be captured on any device platform of a user device, and enables the device platform to communicate with the audiovisual content server to retrieve relevant content based on image recognition of an object in the image. Images, audio, or video may be uploaded to the audiovisual content server and stored as content for objects. The content for each object may be associated with geographic location information of the object, such as geofencing information, city information, category information, etc. The audiovisual content server may be queried, such as through a representational state transfer (REST) application programming interface (API), to obtain real-time audio and/or visual content from the audiovisual content server based on a user's location to display on the user device. One example of content may include instructional videos. Another example may include augmented reality. Augmented reality may provide the user device with a live, direct or indirect, view of a physical, real-world environment whose elements are augmented (e.g., supplemented) by computer-generated sensory input to enhance a user's perception of reality. Unlike virtual reality which replaces the real world with a simulated one, augmented reality includes a real-time overlay of virtual data, images, and videos onto live video feeds. For augmented reality, the base layer is typically real and may include, for example, a live video feed, or in the case of head-mounted displays, a user's own vision.

According to an example, a first signal may be received from a user device. The first signal may include a captured image of an object and geofencing information of the user device that captured the image of the object. In addition to the geofencing information or in lieu of the geofencing information, other parameters associated with the user or the user device may be included in the first signal. The audiovisual content server may analyze the captured image of the object compare it to a plurality of images of objects stored in a database. The object is then identified by matching the captured image of the object to one of the images of objects stored in the database. To further verify the object, a location of the user device may be calculated based on the received geofencing information. The geofencing information may include positioning information for the user device based on at least one of global positioning system (GPS) location information, Wi-Fi positioning information, and cell tower positioning information. The Wi-Fi positioning information, for instance, may be utilized for indoor environments where GPS signals from satellites may be blocked. In any regard, to verify the identity of the object, the calculated location of the user device may be matched to a location associated with the matching one of the plurality of images of the objects stored in the database. Thus, if the object is identified and the object's location is verified, a second signal including audio and/or visual content is transmitted in real-time to the user device for.

The disclosed methods and systems may be utilized in many environments. As discussed above, the audio and/or visual content may be provided for device configuration. In an example, field technicians, including field technicians in the telecommunications industry that may install, repair, and maintain multiple systems like broadband, digital television, mobile phone network, landline networks, fiber optic systems, etc., can use one or more of the systems and methods described herein to obtain guidance for installing, repairing, and maintaining devices while in the field. Therefore, the need to wait or postpone a repair task or other device-related task due to lack of information is rendered moot by the disclosed examples.

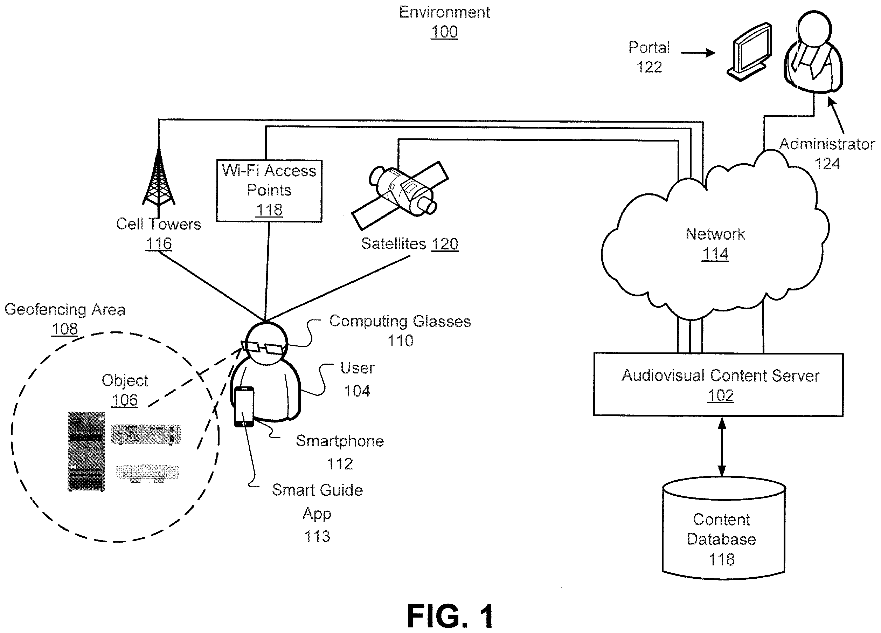

FIG. 1 illustrates an environment 100 including an audiovisual content server 102, according to an example of the present disclosure. The environment 100 may include a user 104, such as, for example, a network administrator, a field technician, etc., that would like to receive real-time audio and/or video (e.g., audiovisual) content for an object 106. The object 106 may be anything of interest to the user 104, such as a network device (e.g., routers, hubs, network switches, etc.), computer (e.g., servers, laptops, desktops, etc.), telecommunications equipment in the field (e.g., network switches, fiber optic nodes, connectors, cables, etc.), customer premises equipment (e.g., set-top boxes, televisions, wireless routers or access points, etc.), or other types of devices or computers.

The user 104 may capture an image of the object 106 with an image capture device, such as a camera or video camera. The image may be a still image or may be a frame from video. The camera may be incorporated in a user device, such as a camera of computing glasses 110, smartphone 112, a computing tablet, a laptop, etc. The computing glasses 110 may generally function as a head mounted display unit that provides graphic overlays. GOOGLE GLASS is an example of the computing glasses 110. The image of the object 106 may be transmitted to the audiovisual content server 102, via network 114, for recognition and identification. The audiovisual content server 102, for instance, may be located on the cloud, and the audiovisual content server 102 identifies content associated with the object 106 based on the captured image of the object 106. The audiovisual content server 102 sends the identified content to the user device, such as smartphone 112 or computing glasses 110, via the network 114. In an example, the object is a network device and/or CPE, and the identified content may be an instructional video instructing the user how to configure or repair the object 106. The instructional video may be played on the user device, such as the smartphone 112 or the computing glasses 110.

In an example, the smartphone 112 includes a mobile application, i.e., smart guide app 113. The smart guide app 113 may be launched to capture the image of the object 106, and send a request to the audiovisual content server 102, including the captured image and other parameters such as geographic location. For example, the computing glasses 110 and the smartphone 112 may execute smart guide app 113 to generate a graphical user interface (GUI) that allows the user 104 to request a smart match, a playlist, or a frequently asked questions (FAQs)/Help file from the audiovisual content server 102. The smart guide app 113 may recognize a viewed object and play corresponding audiovisual guidance information retrieved from the audiovisual content server 102 on the user device. The playlist may fetch and display on the user device a list of relevant audiovisual guidance information files of nearby objects received from the audiovisual content server 102. The smart guide app 113 may be executed on any type of user device.

The network 114 may be a public communication network, e.g., the Internet, cellular data network, and/or a private communications network, e.g., private LAN, leased lines. The network 114 may include one or more networks. The network(s) may provide for communications under various modes or protocols, such as Global System for Mobile communication (GSM) voice calls, Short Message Service (SMS), Enhanced Messaging Service (EMS), or Multimedia Messaging Service (MMS) messaging, Code Division Multiple Access (CDMA), Time Division Multiple Access (TDMA), Personal Digital Cellular (PDC), Wideband Code Division Multiple Access (WCDMA), CDMA2000, General Packet Radio System (GPRS), or one or more television or cable networks, among others. For example, the communication may occur through a radio-frequency transceiver. In addition, short-range communication may occur, such as using a BLUETOOTH, Wi-Fi, or other such transceiver.

Additionally, geofencing information may be used to identify the object 106. Geofencing area 108 is a geographic area that may be predetermined. in an example, administrator 124 can set the geofencing area 108, such as the location and the size of the geofencing area 108. In an example, multiple geofencing areas may be predetermined. As is further discussed below, objects within each geofencing area that may be of interest to the user are identified and associated with the corresponding geofencing area. The corresponding geofencing area for each object may be stored in content database 118, and used to identify content for the object when a request for content associated with an object is sent to the audiovisual content server 102.

To determine whether the user 104 is in the geofencing area 108, the current geographic location information of the user 104 is determined. The current geographic location information of the user 104 may be determined from GPS, which may be available through the user device, such as smartphone 112 or computing glasses 110. Wi-Fi positioning information or cell tower positioning information may be used to determine the current geographic location. In an example, the user 104 may connect to the network 114 through an access network, which may include cell towers 116, Wi-Fi access points 118, and/or satellites 120. If the location of a cell tower or a Wi-Fi access point which is currently being used by the user 104 is known, then that location may be considered the current location of the user. In an example, the Wi-Fi positioning information may be utilized for indoor environments where GPS signals from satellites may be blocked. In another example, signal strength or triangulation may be used with the cell towers 116 and the Wi-Fi access points 118 to determine the user's location. Also,

As discussed above, the audiovisual content server 102 receives a request which may include a captured image of the object 106 and other parameters, such as the user's location, to determine whether content associated with the object 106 is available to be provided to the user 104. In an example, the request is a query received via a REST API. The query may include a captured image of the object 106, geographic location of the user device, and other information. The query is received at the audiovisual content server 102 and executed on the content database 118. The content database 118 may store content associated with objects, images of the objects, and geographic locations of the objects. The stored images and geographic locations are used to identify stored content associated with the object in the captured image, which may be provided in the query or request from the user device. As a result, for instance, the audiovisual content server 102 provides a framework whereby the user 104 may upload a captured image of the object 106 and the geofencing information of the user device to query the audiovisual content server 102, such as through the REST API, to obtain audiovisual guidance information relating to the object 106.

The audiovisual content server 102 may generate a web portal 122 which provides a graphical user interface for users to provide information to the audiovisual content server 102. For example, a system administrator 124 may upload content to the content database 118 for objects that may be of interest to the user 104 or other users. Also, geofencing areas may be defined via the portal 122 and stored in the content database 118. An object is associated with a geofencing area where it is located, and the association is stored in the content database, along with an image of the object and the content for the object. For example, the content database 118 may store, for each object, an object identifier (ID), an image of the object, content for the object, and a geofencing area where the object is located. Other parameters and information may be stored for the object, such as whether a user has privileges to access the content or other information pertaining to users or the object.

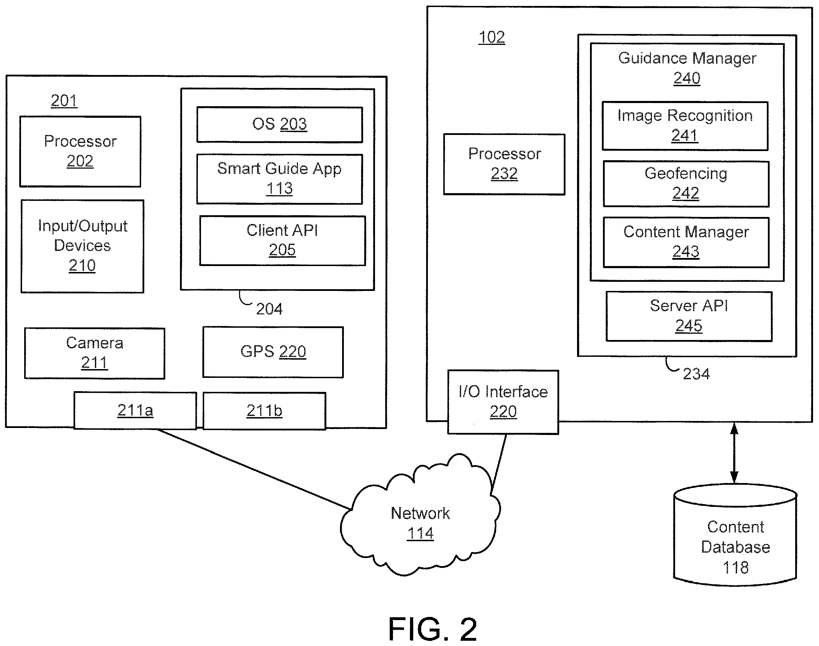

FIG. 2 shows an example of components of a user device 201 for the user 104, and shows components for the audiovisual content server 102. The user device 201 may be used by the user 104, and may include the smartphone 112 or the computing glasses 110. It should be understood that the user device 201 and the audiovisual content server 102 may include additional components and that one or more of the components described herein may not be included in the respective device or computer.

The user device 201 includes a processor 202 and data storage 204. The processor 202 is an integrated circuit. The processor 202 may be a chipset with central processing unit and/or custom processing circuits, such as an application-specific integrated circuit (ASIC) or field-programmable gate array (FPGA). Data storage 204 may include memory and/or non-volatile data storage. Data storage 204 may store software or firmware including machine readable instructions, and may store any information used by user device 201. The software or firmware may include subroutines and/or applications executed by the processor 202 for performing operations described herein. For example, operating system (OS) 203, smart guide app 113 and client API 205 may comprise machine readable instructions executed by the processor 202. The applications may include the smart guide app 113. Any information used by the smart guide app 113 and the OS 203 may be stored in the data storage 204. For example, the data storage 204 may store captured images, geographic location, etc. The client API 205 can send queries for content to the audiovisual content server 102, and receive query results, such as a video or other types of content, from the audiovisual content server 102, for playback by the smart guide app 113. The client API 205 may also upload images and associated content to the audiovisual content server 102 for storage in the content database 118. In an example, the client API 205 is a REST API that communicates with the audiovisual content server 102 with Hypertext Transfer Protocol (HTTP) request or other web-based protocols.

The user device 201 includes input/output (I/O) devices 210, such as keyboard, touch screen display, speaker, etc. The I/O devices 210 may provide audio, visual and/or tactile feedback. One or more of the I/O devices 210 may be used to play content retrieved from the audiovisual content server 102. The I/O devices 210 may include a display, such as a touchscreen. The user device 201 may include a camera 211 to capture images of objects, such as the object 106. Also, the user device 201 may include a location sensor 220, such as a GPS receiver, shown as GPS 220, that can determine the location of the user device 201. Location information of the user device 201, which may be determined by the GPS 220, may be included in a query, along with a captured image of the object 106, sent to the audiovisual content server 102 to retrieve related content.

The user device 201 may include one or more interfaces 211, wired or wireless, for communicating with other devices or computers. For example, interface 211a is a network interface that facilitates the user device 201 to connect to the audiovisual content server 102 via the network 114. The interface 211a may be a Wi-Fi interface or a cellular interface or may include both interfaces. The interface 211a may include a wired network interface. The interface 211b may include a Bluetooth interface or a Near field communication (NFC) interface that allows for short-range communication with other devices or beacons.

Components of the audiovisual content server 102 are also shown. It should be understood that the audiovisual content server 102 may include additional components and that one or more of the components described herein may be removed and/or modified without departing from a scope of the audiovisual content server 102.

The audiovisual content server 102 is depicted as including a processor 232 and a data storage 234 including guidance manager 230. The processor 232 is an integrated circuit. The processor 232 may be a chipset with central processing unit and/or custom processing circuits, such as an application-specific integrated circuit (ASIC) or field-programmable gate array (FPGA). Data storage 234 may include memory and/or non-volatile data storage. Data storage 234 may store software or firmware including machine readable instructions executed by the processor 232, and may store any information used by the audiovisual content server 102. The machine readable instructions may include guidance manager 240 and server API 245. The components of the audiovisual content server 102 are shown on a single computer or server as an example and in other examples the components may exist on multiple computers or servers.

The audiovisual content server 102 may store content and related parameters in the content database 118. The content database 118 may include physical memory such as a hard drive, an optical drive, a flash drive, an array of drives, or any combinations thereof, and may include volatile and/or non-volatile data storage. Portal 122 may be used to upload and manage data, including audio, video or any other graphical elements for objects, including the object 106, and the data is stored in the content database 118. The data may include geographic location information for the objects, such as GPS coordinates, identification of a geofencing area where each object is locations, etc.

The guidance manager 240 performs functions of the audiovisual content server 102, including but not limited to image recognition 241, geofencing 242, and content management performed by content manager 243. Image recognition 241 compares a captured image of the object 106, which may be sent to the audiovisual content server 102 in a query from the user device 201, with images that may be stored in the content database 118 to identify matches. If a match is found, the content associated with the matching image may be transmitted to the user device 201 for playback. In an example, the image matching performed by the image recognition 241 may include class implemented ORB (oriented BRIEF) keypoint detector and descriptor extractor, described in Ethan Rublee, Vincent Rabaud, Kurt Konolige, Gary R. Bradski; "ORB: An efficient alternative to SIFT or SURF"; ICCV 2011: 2564-2571. The class implemented ORB keypoint detector and descriptor extractor algorithm uses the FAST algorithm in pyramids to detect stable keypoints, and selects the strongest features using FAST or a Harris response, and finds their orientation using first-order moments and computes the descriptors (where the coordinates of random point pairs (or k-tuples) are rotated according to the measured orientation). An open source library, such as OpenCV 2.4, can be used to provide the class implemented ORB keypoint detector and descriptor extractor for the image recognition 241 to match a captured image with a stored image.

The geofencing 242 may compare a received geographic location of the user device 201 with geographic location information associated with each stored image as a verification that the captured image matches a stored image. For example, the user device 201 sends its geographic location determined for the instance an image is captured of the object 106, along with the captured image, to the audiovisual content server 102 in a query. If an image match is found, geographic location associated with the matched image is compared with the geographic location received from the user device 201 to verify the match. If the geographic location of the user device 201 matches the stored geographic location associated with the matched image the match is verified. Matching the geographic locations may include determining whether the geographic location of the user device 201 is within a stored geofencing area of an object or within a predetermined distance of a stored location of the object.

Content manager 243 may provide matching query results, such as associated content, or an indication of no matching results to the user device 201. The associated content may include guidance videos or other types of content such as discussed above.

Server API 241 provides an interface to send and receive query results and to store data in the content database 118. In an example, the server API is a REST API.

An I/O interface 220 may include hardware and/or software. The I/O interface 220 may be a network interface connected to the network 114. The I/O interface 220 may be a wireless local area network (WLAN) or a network interface controller (NIC). The WLAN may link the audiovisual content server 102 to the network device through a radio signal. Similarly, the NIC may link the audiovisual content server 102 to a network device through a physical connection, such as a cable.

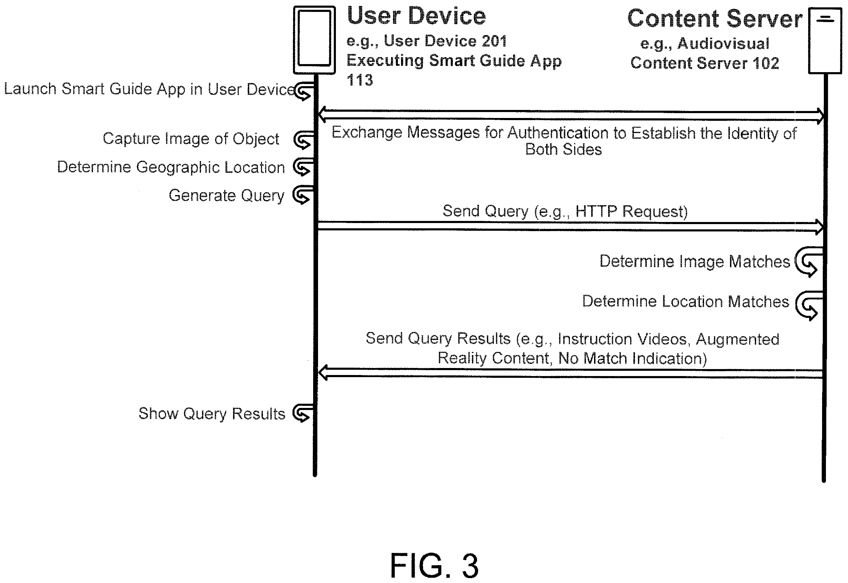

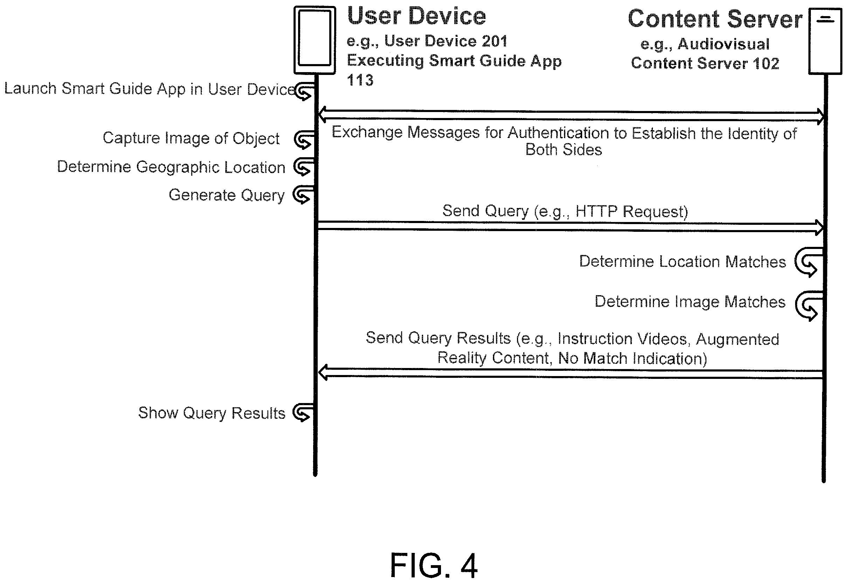

FIGS. 3 and 4 show examples of operations and communications between the user device 201 and the audiovisual content server 102. FIG. 3 shows that the smart guide app 113 may be launched on the user device 201, and messages may be exchanged with the audiovisual content server 102 to authenticate the user 104. For example, the user 104 may enter a login ID and password, which is transmitted to the audiovisual content server 102 to authenticate the user.

The user 104 may capture an image of the object 106 with camera 211, and a geographic location of the user device 201 is determined at the time the image is captured, such as by GPS 220. The smart guide app 113 generates a query to send to the audiovisual content server 102 for any content associated with the object 106. The query for example includes the captured image and the geographic location. The query may be sent via the client API 205, e.g., as an HTTP request, to the audiovisual content server 102.

The audiovisual content server 102 determines whether there is any content stored in the content database 118 that matches the query to send to the user device 201. For example, image recognition 241 in guidance manager 240 determines whether there are any images stored in the content database 118 that match the captured image in the query. If any matches are found, geofencing 242 of the guidance manager 240 determines whether the matching image has a stored location that matches the geographic location of the user device 201 sent in the query. If one or more matches are identified, the associated content for the matches are retrieved from the content database 118 and sent to the user device 201, where the content may be selected and viewed for example via the smart guide app 113. The content may include instruction videos, augmented reality content, such as images, graphics, text, etc., overlaid on a live video feed or overlaid on what the user is viewing, such as through the computing glasses 110. If no matches to the query are found, an indication that no matches are found is sent to the user device 201 and may be displayed by the smart guide app 113.

FIG. 4 is similar to FIG. 3 except that to execute the query, the audiovisual content server 102 may first identify location matches and then for any stored content having a matching location, determine whether there is an image match with the captured image. This reduces the amount of image matching that may have to be performed, since the image matching is performed only for stored content associated with objects at or near the current location of the user device 201 when the image is captured of the object 106. Accordingly, image recognition processing may be reduced and search results may be provided to the user 104 in a shorter amount of time.

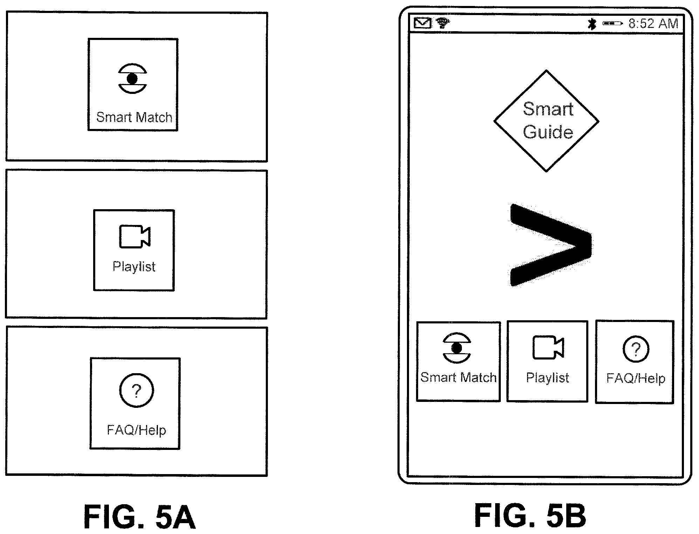

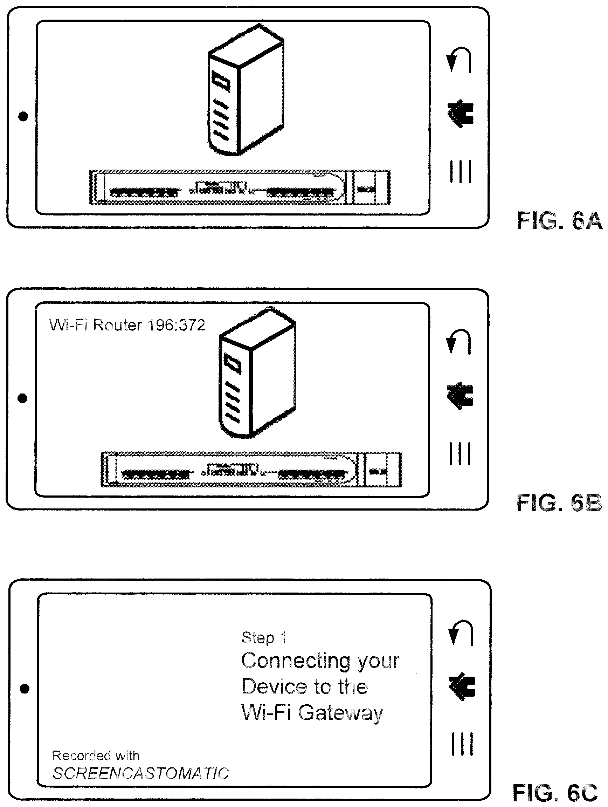

FIGS. 5A-B show examples of screenshots for the smart guide app 113. Once the smart guide app 113 is launched, the user 104 may be displayed options to select smart match, playlist or FAQ/help. FIG. 5A shows these options as they may be presented through the computing glasses 110, and FIG. 5B shows these options as they may be presented through the smartphone 112. If smart match is selected, the smart guide app 113 launches a camera preview to allow the user 104 to take capture an image of an object with the camera 211. For example, an image of a target system, e.g., a Wi-Fi router, is captured as shown in FIG. 6A. The image is sent to the audiovisual content server 102 along with location of the user device 201. A match is found for the Wi-Fi router, and an indication is presented that indicates a match is found. For example, FIG. 6B shows that the target system captured in the image is matched with an image of the target system, e.g., Wi-Fi Router 196:372, stored in the content database 118. The content for the match is retrieved from the content database 118, and the audiovisual content server 102 sends the content to the user device 201 for display. For example, as shown in FIG. 6C, an instructional video "Connection your Device to the Wi-Fi Gateway" is the content sent to the user device 201, and is played on the user device to provide instructions on how to connect a device to the Wi-Fi router. The video may show step-by-step instruction on how to install, repair or maintain the target system. This not only saves productive time of a field technician but also provides a fast and convenient way to accomplish the technician's tasks.

The smart guide app 113 may be used in other environments. For example, the smart guide app 113 may be used by a tourist to view information about an object of interest, such as a painting in a museum or a monument. In another example, the smart guide app 113 may be used in an amusement park to determine information about rides, such as wait time, height or age recommendations or restrictions, etc.

The playlist option shown in FIGS. 5A and 5B may be selected to request information about all objects near the current location of the user device 201. For example, if playlist is selected, a query is sent to the audiovisual content server 102 with the current location of the user device 201, and the audiovisual content server 102 sends content for objects within a predetermined distance of the user device 201 or within the current geofencing area of the user device 201. The user 104 may select content to view from the playlist. The FAQ/help option, if selected, displays instructions for how to use the smart guide app 113.

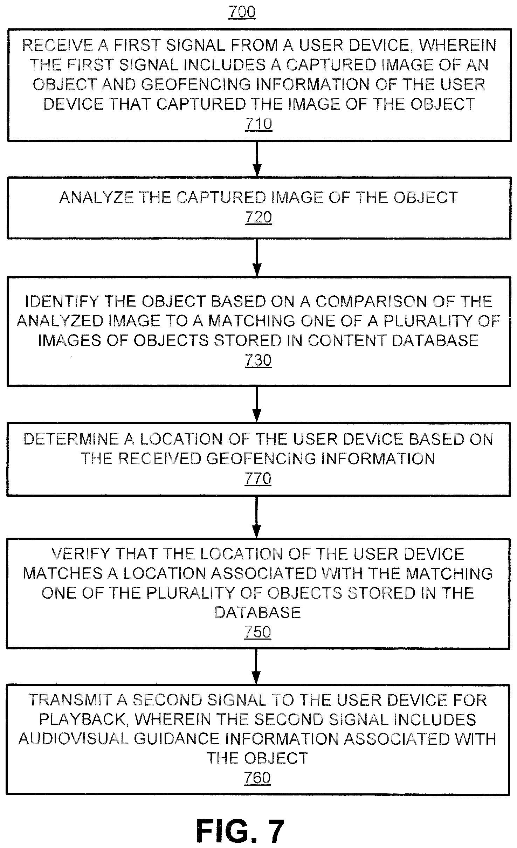

FIG. 7 shows a flow chart of a method 700 to provide audiovisual guidance regarding an object captured by a user device, according to an example of the present disclosure. Method 700 may, for example, be implemented by the processor 232 of the audiovisual content server 102. It should be apparent to those of ordinary skill in the art that the method 700 represents a generalized illustration and that other steps may be added or existing steps may be removed, modified or rearranged without departing from the scopes of the method 700.

In block 710, the audiovisual content server 102, for instance, may receive a first signal from user device 201. As discussed above, the user device 201 may be a smartphone, a pair of computing glasses, a computing tablet, a laptop, etc. In any case, the user device 201 may include a display viewable by the user, and a camera 211 to capture the object 106 viewed by the user 104. According to an example, the first signal may include a captured image of an object (e.g., object 106) and geofencing information of the user device 201 (e.g., geographic location of the user device 201 when the image of the object 106 is captured). The captured image of the object 106 may include image key descriptors. The image key descriptors may summarize some characteristics about key points in an image. The key points, for instance, obtain information about the position and the coverage area of certain features in the image. In this regard, for example, the image key descriptors may assign a numerical description to the area of the image that the key point refers. The geofencing information may include data pertaining to the position of the user device 201 in relation to the boundaries of one or more geofencing areas or regions set by the system administrator for example.

In block 720, the image recognition 241 of the audiovisual content server 102, for instance, may analyze the captured image of the object. For example, the image recognition 241 may implement a known computer vision or pattern recognition algorithm to extract information from the captured image to electronically perceive and classify the image.

In block 730, the image recognition 241 may compare the analyzed image of the object 106 to a plurality of images of objects stored in the content database 118. The object 106 may then be identified based on a match of the analyzed image of the object to a one of a plurality of images of objects stored in the content database 118. To compare the image from the first signal to images of objects stored in the content database 118, an image recognition operation may be performed to determine information for the image in the first signal, and to compare the information for the image to information for the stored images. For example, keypoints of visual features are identified from the images for comparison to determine whether the images match, such as described by the ORB image matching function.

In block 770, geofencing 242 performed by the guidance manager 240 for instance, may determine a location of the user device 201 based on the received geofencing information. The geofencing information may include positioning information for the user device 201 based on at least one of global positioning system (GPS) location information, Wi-Fi positioning information, and cell tower positioning information. The Wi-Fi positioning information may be utilized for indoor environments where GPS signals from satellites may be blocked. A Wi-Fi positioning algorithm may locate the user device with wireless access points based on measuring the intensity of the received signal. The service set identifier (SSID) and the message authentication code (MAC) address are parameters of the user device that may be used in a Wi-Fi positioning algorithm of the present disclosure. For example, the accuracy depends on the number of positions that have been entered into a database, such as a Wi-Fi hotspot database. The Wi-Fi hotspot database gets filled by correlating user device GPS location data with Wi-Fi hotspot MAC addresses. A cell tower positioning algorithm may locate the user device based on triangulation of cell towers.

In block 750, the geofencing 242 may verify that the determined location of the user device matches a location associated with the matching one of the plurality of images of the objects stored in the content database 118. According to an example, location information may be stored for each one of the plurality of images of the objects stored in the database.

Accordingly, if the object 106 is identified in block 730 and the object's location is verified in block 750, the audiovisual content server 102 may transmit a second signal in real-time to the user device 201 for playback as shown in block 760. The second signal, for example, may include audiovisual guidance information associated with the object 106 or other content associated with the object 106. According to an example, each of the plurality of images of the objects is mapped to related content in a table of the content database 118. Audiovisual guidance information may include background, context, sound and visual effects, and information for technician instructions or an exhibit in a museum that the user 104 is viewing. The audiovisual guidance information may also include instructions on how to operate a device or fix a malfunctioning device that the user is viewing.

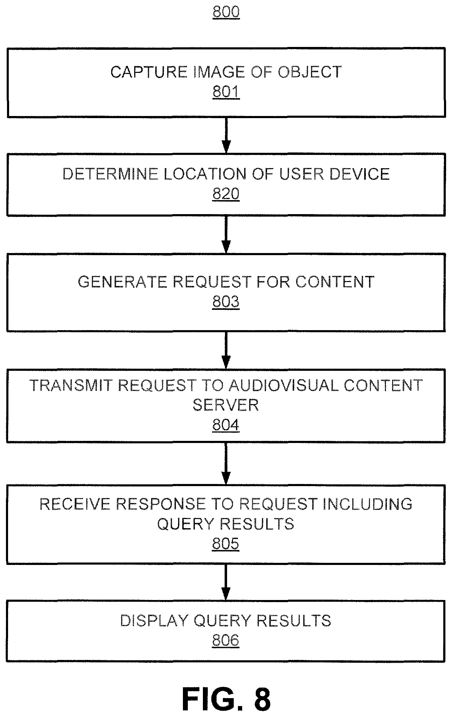

FIG. 8 illustrates an example of a method 800 that may be performed by the user device 201 executing the smart guide app 113. In block 801, an image of the object 106 is captured by the camera 211. In block 802, a location of the user device is determined for an instant or time when the image of the object is captured. The location may be determined from a location sensor, such as GPS 220, or by other location determination techniques. In block 803, a request for content including a query comprising the image of the object and the geographic location of the user device is generated. In block 804, the request is transmitted to the audiovisual content server 103. In block 805, the user device 201 receives a response to the request including the query results. The query results may include matching content from the content database 118. In block 806, the query results may be displayed at the user device 201. For example, the retrieved content may be played on the user device 201.

What has been described and illustrated herein is an example along with some of its variations. The terms, descriptions and figures used herein are set forth by way of illustration only and are not meant as limitations.

## Claims

1. An audiovisual content server (102) to provide guidance information for technicians (104), the audiovisual content server (102) comprising:
a content database (118) storing content including audiovisual guidance information for configuring devices (106), geographic location information for the devices (106), and images for the devices (106);
at least one processor (232) to:
receive a query from a user device (110, 112, 201), the query including an image of a device (106), and a geographic location of the user device (110, 112, 201) determined when the image was captured;
compare the image in the query to the stored images in the content database (118), wherein to compare the image, the at least one processor (232) is to execute an image recognition operation on the image in the query to determine information for the image and compare the information for the image to information for the stored images;
identify a stored image matching the image in the query based on the comparison of the image in the query to the stored images;
determine whether a geographic location for the stored image matches the geographic location of the query;
retrieve content associated with the matching image from the content database (118) if the geographic location for the stored image matches the geographic location of the query, wherein the content comprises an instructional video for configuring the device (106); and
transmit the retrieved content to the user device (110, 112, 201).

2. The audiovisual content server (102) of claim 1, wherein the geographic location for the stored image comprises a geofencing area, and to determine whether a geographic location for the stored image matches the geographic location of the query, the at least one processor (232) is to determine whether a geographic location for the stored image is within the geofencing area.

3. The audiovisual content server (102) of claim 1 or 2, wherein the at least one processor (232) identifies a subset of stored images in the content database (118), each having a geographic location matching the geographic location for the stored image, and determines at least one matching image from the subset for the received query.

4. The audiovisual content server (102) of any one of the preceding claims, wherein the at least one processor (232) receives uploaded images, associated geographic locations for the uploaded images, and associated content for the uploaded images via a web portal (122), and stores the uploaded images, associated geographic locations, and the associated content in the content database (118);
wherein the audiovisual content server (102) may comprise an application program interface (245) to receive the query, wherein the query may be transmitted in a hypertext transfer protocol request, and the retrieved content may be transmitted to the user device (110, 112, 201) as a hypertext transfer protocol response.

5. A user device (110, 112, 201) to provide guidance information for technicians (104), the user device (110, 112, 201) comprising:
a camera (211) to capture an image of a device (106);
a location sensor (220) to determine a location of the user device (110, 112, 201);
a data storage (204) to store an application (113) and an application program interface (205); and
a processor (202) to execute the application (113), wherein the executed application (113) is to:
capture the image of the device (106);
determine, from the location sensor (220), a geographic location of the user device (110, 112, 201) when the image of the object (106) is captured;
generate a request for content including a query comprising the image of the device (106) and the geographic location of the user device (110, 112, 201);
transmit the request to an audiovisual content server (102) via the application program interface (205), wherein the audiovisual content server (102) is to identify a stored image matching the image in the query based on the comparison of the image in the query to stored images in a content database (118), determine whether a geographic location for the stored image matches the geographic location of the query, and retrieve content associated with the matching image from the content database (118) if the geographic location for the stored image matches the geographic location of the query, wherein the content comprises an instructional video for configuring the device (106);
receive via the application program interface (205) a response to the request, wherein the response includes the retrieved content; and
display the retrieved content via a display (210).

6. The user device (110, 112, 201) of claim 5, wherein the executed application (113) is to generate a graphical user interface including selectable options for querying the audiovisual content server (102) for content associated with the captured image, and for generating a playlist of content retrieved from the audiovisual content server (102) that is associated with devices within a predetermined distance of a current geographic location of the user device (110, 112, 201).

7. The user device (110, 112, 201) of claim 5 or 6, wherein in response to selection of the option for querying the audiovisual content server (102), the executed application (113) is to invoke a preview mode of the camera (211) to capture the image of the device (106).

8. The user device (110, 112, 201) of any one of claims 5 to 7, wherein in response to selection of the option for generating a playlist of content, the executed application (113) is to send a query to the audiovisual content server (102) with the current geographic location of the user device (110, 112, 201) to retrieve the content associated with devices (106) within the predetermined distance of the current geographic location;
wherein the playlist may comprise selectable content for viewing by a user (104) via the user device (110, 112, 201).

9. The user device (110, 112, 201) of any one of claims 5 to 8, wherein the query results comprise at least one of video, audio and augmented reality content that is overlaid over a live video feed or overlaid on a display of an image currently being captured by the camera (211);
wherein the user device (110, 112, 201) may comprise a wearable user device (110) or a smartphone (112).

10. A computer-implemented method to provide real-time audiovisual guidance information for technicians (104), the method comprising:
receiving, by an audiovisual content server (102) including a processor (232), a first signal from a user device (110, 112, 201), wherein the first signal includes a captured image of a device (106) and a geographic location of the user device (110, 112, 201) determined when the image was captured;
analyzing the captured image of the device (106);
identifying the device (106) based on a comparison of the analyzed image to a matching one of a plurality of images of devices stored in a database (118);
determine a location of the user device (110, 112, 201) based on the received geographic location;
verifying that the location of the user device (110, 112, 201) matches a location associated with the matching one of the plurality of devices stored in the database (118); and
transmitting a second signal to the user device (110, 112, 201) for playback, wherein the second signal includes audiovisual guidance information comprising an instructional video for configuring the device (106).

11. The method of claim 10, wherein the location associated with the matching one of the plurality of devices (106) comprises a geofencing area, and verifying that the location of the user device (110, 112, 201) matches a location associated with the matching one of the plurality of devices stored in the database (118) comprises determining whether the location of the user device (110, 112, 201) is within the geofencing area of the matching one of the plurality of devices.

12. The method of claim 10 or 11, comprising:
identifying a subset of stored images in a content database (118), each having a geographic location matching the location of the user device (110, 112, 201); and
identifying the device (108) based on a comparison of the analyzed image to a matching one of the stored images in the subset.

13. The method of any one of claims 10 to 12, comprising:
receiving an upload of images, associated geographic locations for the uploaded images, and associated content for the uploaded images via a web portal (122); and
storing the uploaded images, the associated geographic locations, and the associated content in the database (118).

14. The method of any one of claims 10 to 13, wherein the first signal comprises a hypertext transfer protocol request including the captured image of the device (106) and the geofencing information of the user device (110, 112, 201);
wherein the audiovisual guidance information may comprise an instructional video for configuring a network device.

15. The method of any one of claims 10 to 14, wherein the other content comprises information about the device (106) or augmented reality content that is overlaid over a live video feed or overlaid on a display of an image currently being captured by the camera (211);
wherein the user device (110, 112, 201) may comprise a wearable user device (110) or a smartphone (112).

## Patentansprüche

1. Ein audiovisueller Inhaltsserver bzw. Content-Server (102) zum Bereitstellen von Führungsinformationen für Techniker (104), wobei der audiovisuelle Inhaltsserver (102) Folgendes umfasst:
eine Inhaltsdatenbank (118), die Inhalte abspeichert, die audiovisuelle Führungsinformationen zum Konfigurieren von Vorrichtungen (106), geographische Standortinformationen für die Vorrichtungen (106) und Bilder für die Vorrichtungen (106) beinhalten;
mindestens einen Prozessor (232), um Folgendes zu bewerkstelligen:
Empfangen einer Abfrage ausgehend von einer Benutzervorrichtung (110, 112, 201), wobei die Abfrage ein Bild einer Vorrichtung (106) und einen geografischen Standort der Benutzervorrichtung (110, 112, 201) beinhaltet, der beim Aufnehmen des Bildes bestimmt wurde;
Vergleichen des Bildes in der Abfrage mit den gespeicherten Bildern in der Inhaltsdatenbank (118), wobei zum Vergleichen des Bildes der mindestens eine Prozessor (232) einen Bilderkennungsvorgang am Bild in der Abfrage ausführt, um Informationen für das Bild zu bestimmen und die Informationen für das Bild mit Informationen für die gespeicherten Bilder zu vergleichen;
Identifizieren eines gespeicherten Bildes, das mit dem Bild in der Abfrage übereinstimmt, basierend auf dem Vergleich des Bildes in der Abfrage mit den gespeicherten Bildern;
Bestimmen, ob eine geografische Position für das gespeicherte Bild mit der geografischen Position der Abfrage übereinstimmt;
Abrufen von Inhalten, die dem übereinstimmenden Bild zugeordnet sind, aus der Inhaltsdatenbank (118), falls der geografische Standort für das gespeicherte Bild mit dem geografischen Standort der Abfrage übereinstimmt, wobei der Inhalt ein Lehrvideo zum Konfigurieren der Vorrichtung (106) umfasst; und
Übertragen des abgerufenen Inhalts an die Benutzervorrichtung (110, 112, 201).

2. Der audiovisuelle Inhaltsserver (102) nach Anspruch 1, wobei die geographische Position für das gespeicherte Bild Folgendes umfasst: einen *Geofencing*-Bereich, und die Bestimmung, ob eine geographische Position für das gespeicherte Bild mit der geographischen Position der Abfrage übereinstimmt, wobei der mindestens eine Prozessor (232) feststellen soll, ob eine geographische Position für das gespeicherte Bild innerhalb des *Geofencing*-Bereichs liegt.

3. Der audiovisuelle Inhaltsserver (102) nach Anspruch 1 oder 2, wobei der mindestens eine Prozessor (232) eine Teilmenge gespeicherter Bilder in der Inhaltsdatenbank (118) identifiziert, die jeweils eine geografische Position aufweisen, die mit der geografischen Position für das gespeicherte Bild übereinstimmt, und für die empfangene Abfrage mindestens ein übereinstimmendes Bild aus der Teilmenge bestimmt.

4. Der audiovisuelle Inhaltsserver (102) eines der vorstehenden Ansprüche, wobei der mindestens eine Prozessor (232) Folgendes empfängt: hochgeladene Bilder, zugeordnete geographische Positionen für die hochgeladenen Bilder und zugeordnete Inhalte für die hochgeladenen Bilder über ein Webportal (122), und die hochgeladenen Bilder, die zugeordneten geographischen Positionen und die zugehörigen Inhalte in der Inhaltsdatenbank (118) speichert;
wobei der audiovisuelle Inhaltsserver (102) eine Anwendungsprogramm-Schnittstelle (245) zum Empfangen der Abfrage umfassen kann, wobei die Abfrage in einer Hypertext-Übertragungsprotokoll-Anforderung übertragen werden kann und der abgerufene Inhalt als Hypertext-Übertragungsprotokoll-Antwort an die Benutzervorrichtung (110, 112, 201) übertragen werden kann.

5. Eine Benutzervorrichtung (110, 112, 201) zum Bereitstellen von Führungsinformationen für Techniker (104), wobei die Benutzervorrichtung (110, 112, 201) Folgendes umfasst:
eine Kamera (211), um ein Bild einer Vorrichtung (106) aufzunehmen;
einen Positionssensor (220), um einen Standort der Benutzervorrichtung (110, 112, 201) zu bestimmen;
einen Datenspeicher (204) zum Speichern einer Anwendung (113) und einer Anwendungsprogramm-Schnittstelle (205); und
einen Prozessor (202) zum Ausführen der Anwendung (113), wobei die ausgeführte Anwendung (113) Folgendes bewerkstelligt:
Erfassen des Bildes der Vorrichtung (106);
Bestimmen, ausgehend vom Standortsensor (220), eines geografischen Standorts der Benutzervorrichtung (110, 112, 201) wenn das Bild des Objekts (106) erfasst wird;
Erzeugen einer Anforderung für Inhalte, die eine Abfrage beinhaltet, die das Bild der Vorrichtung (106) und den geografischen Standort der Benutzervorrichtung (110, 112, 201) umfasst;
Übertragen der Anforderung an einen audiovisuellen Inhaltsserver bzw. Content-Server (102) über die Anwendungsprogramm-Schnittstelle (205), wobei der audiovisuelle Inhaltsserver (102) ein gespeichertes Bild identifizieren soll, das dem Bild in der Abfrage entspricht, basierend auf dem Vergleich des Bildes in der Abfrage mit gespeicherten Bildern in einer Inhaltsdatenbank (118), bestimmen soll, ob ein geografischer Standort für das gespeicherte Bild mit dem geografischen Standort der Abfrage übereinstimmt, und Inhalte abrufen soll, die dem übereinstimmenden Bild aus der Inhaltsdatenbank (118) zugeordnet sind, falls der geografische Standort für das gespeicherte Bild mit dem geografischen Standort der Abfrage übereinstimmt, wobei der Inhalt ein Lehrvideo zum Konfigurieren der Vorrichtung (106) umfasst;
Empfangen, über die Anwendungsprogrammschnittstelle (205), einer Antwort auf die Anforderung, wobei die Antwort den abgerufenen Inhalt beinhaltet; und
Anzeigen des abgerufenen Inhalts über eine Anzeige (210).

6. Die Benutzervorrichtung (110, 112, 201) nach Anspruch 5, wobei die ausgeführte Anwendung (113) eine grafische Benutzerschnittstelle erzeugen soll, die wählbare Optionen beinhaltet zum Abfragen des audiovisuellen Inhaltsservers (102) nach Inhalten, die dem erfassten Bild zugeordnet sind, und zum Erzeugen einer Wiedergabeliste von Inhalten, die vom audiovisuellen Inhaltsserver (102) abgerufen werden, der Vorrichtungen innerhalb einer vorbestimmten Entfernung von einem aktuellen geografischen Standort der Benutzervorrichtung (110, 112, 201) zugeordnet ist.

7. Die Benutzervorrichtung (110, 112, 201) nach Anspruch 5 oder 6, wobei, als Reaktion auf die Auswahl der Option zum Abfragen des audiovisuellen Inhaltsservers (102), die ausgeführte Anwendung (113) einen Vorschaumodus der Kamera (211) aufrufen soll, um das Bild der Vorrichtung (106) aufzunehmen.

8. Die Benutzervorrichtung (110, 112, 201) nach irgendeinem der Ansprüche von 5 bis 7, wobei die ausgeführte Anwendung (113), als Reaktion auf die Auswahl der Option zum Erzeugen einer Wiedergabeliste von Inhalten, eine Abfrage an den audiovisuellen Inhaltsserver (102) nach dem aktuellen geografischen Standort der Benutzervorrichtung (110, 112, 201) senden soll, um den mit Vorrichtungen (106) verbundenen Inhalt innerhalb der vorgegebenen Entfernung vom aktuellen geografischen Standort abzurufen;
wobei die Wiedergabeliste wählbare Inhalte zum Betrachten durch einen Benutzer (104) mittels der Benutzervorrichtung (110, 112, 201) umfassen kann.

9. Die Benutzervorrichtung (110, 112, 201) nach irgendeinem der Ansprüche von 5 bis 8, wobei die Abfrageergebnisse mindestens einen Video-, Audio- oder *Augmented-Reality-*Inhalt umfassen, der über eine Live-Videoübertragung oder über eine Anzeige eines Bildes überlagert wird, das gerade von der Kamera (211) erfasst wird;
wobei die Benutzervorrichtung (110, 112, 201) eine tragbare Benutzervorrichtung (110) oder ein Smartphone (112) umfassen kann.

10. Ein computerimplementiertes Verfahren zum Bereitstellen von audiovisuellen Echtzeit-Führungsinformationen für Techniker (104), wobei das Verfahren Folgendes umfasst:
Empfangen, durch einen audiovisuellen Inhaltsserver (102), der einen Prozessor (232) beinhaltet, eines ersten Signals von einer Benutzervorrichtung (110, 112, 201), wobei das erste Signal ein aufgenommenes Bild einer Vorrichtung (106) und einen geografischen Standort der Benutzervorrichtung (110, 112, 201) beinhaltet, der bestimmt wurde, als das Bild aufgenommen wurde;
Analysieren des aufgenommenen Bildes der Vorrichtung (106);
Identifizieren der Vorrichtung (106) basierend auf einem Vergleich des analysierten Bildes mit einem übereinstimmenden Bild aus einer Vielzahl von Bildern von Vorrichtungen, die in einer Datenbank (118) gespeichert sind;
Bestimmen eines Standorts der Benutzervorrichtung (110, 112, 201) basierend auf dem empfangenen geografischen Standort;
Verifizieren, dass der Standort der Benutzervorrichtung (110, 112, 201) mit einem Standort übereinstimmt, der der übereinstimmenden Vorrichtungen aus der Vielzahl von in der Datenbank (118) gespeicherten Vorrichtungen zugeordnet ist; und
Übertragen eines zweiten Signals an die Benutzervorrichtung (110, 112, 201) zur Wiedergabe, wobei das zweite Signal audiovisuelle Führungsinformationen beinhaltet, die ein Lehrvideo zum Konfigurieren der Vorrichtung (106) umfassen.

11. Das Verfahren nach Anspruch 10, wobei der Standort, der der übereinstimmenden Vorrichtung aus der Vielzahl von Vorrichtungen (106) zugeordnet ist, einen *Geofencing-*Bereich umfasst, und wobei das Verifizieren, dass der Standort der Benutzervorrichtung (110, 112, 201) mit einem Standort übereinstimmt, der der übereinstimmenden Vorrichtung aus der Vielzahl von in der Datenbank (118) gespeicherten Vorrichtungen zugeordnet ist, das Bestimmen umfasst, ob die Position der Benutzervorrichtung (110, 112, 201) innerhalb des *Geofencing*-Bereichs der übereinstimmenden Vorrichtung aus der Vielzahl von Vorrichtungen liegt.

12. Das Verfahren nach Anspruch 10 oder 11, das Folgendes umfasst:
Identifizieren einer Teilmenge von gespeicherten Bildern in einer Inhaltsdatenbank (118), die jeweils einen geografischen Standort aufweisen, der dem Standort der Benutzervorrichtung (110, 112, 201) entspricht; und
Identifizieren der Vorrichtung (108) basierend auf einem Vergleich des analysierten Bildes mit einem übereinstimmenden Bild der gespeicherten Bilder in der Teilmenge.

13. Das Verfahren nach irgendeinem der Ansprüche von 10 bis 12, das Folgendes umfasst:
Empfangen eines Hochladens von Bildern, zugehöriger geografischer Positionen für die hochgeladenen Bilder und zugehöriger Inhalte für die hochgeladenen Bilder über ein Webportal (122); und
Speichern der hochgeladenen Bilder, der zugehörigen geografischen Standorte und des zugehörigen Inhalts in der Datenbank (118).

14. Das Verfahren nach irgendeinem der Ansprüche von 10 bis 13, wobei das erste Signal eine Hypertext-Übertragungsprotokoll-Anforderung umfasst, die das aufgenommene Bild der Vorrichtung (106) und die *Geofencing*-Informationen der Benutzervorrichtung (110, 112, 201) beinhaltet;
wobei die audiovisuellen Führungsinformationen ein Lehrvideo zum Konfigurieren einer Netzwerkvorrichtung umfassen können.

15. Das Verfahren nach irgendeinem der Ansprüche von 10 bis 14, wobei der andere Inhalt Informationen über die Vorrichtung (106) oder *Augmented-Reality-*Inhalte umfasst, die über eine Live-Videoübertragung oder über eine Anzeige eines Bildes überlagert werden, das gerade von der Kamera (211) aufgenommen wird;
wobei die Benutzervorrichtung (110, 112, 201) eine tragbare Benutzervorrichtung (110) oder ein Smartphone (112) umfassen kann.

## Revendications

1. Un serveur de contenu audiovisuel (102) pour fournir des informations de guidage aux techniciens (104), le serveur de contenu audiovisuel (102) comprenant :
une base de données de contenu (118) stockant du contenu incluant des informations de guidage audiovisuel pour configurer des dispositifs (106), des informations de localisation géographique pour les dispositifs (106) et des images pour les dispositifs (106) ;
au moins un processeur (232) pour :
recevoir une requête provenant d'un dispositif utilisateur (110, 112, 201), la requête incluant une image d'un dispositif (106), et un emplacement géographique du dispositif utilisateur (110, 112, 201) qui a été déterminé lorsque l'image a été prise ;
comparer l'image dans la requête aux images stockées dans la base de données de contenu (118), sachant que pour comparer l'image, le au moins un processeur (232) doit exécuter une opération de reconnaissance d'image sur l'image dans la requête pour déterminer des informations pour l'image et comparer les informations de l'image aux informations des images stockées ;
identifier une image stockée correspondant à l'image de la requête sur la base de la comparaison de l'image de la requête avec les images stockées ;
déterminer si un emplacement géographique de l'image stockée correspond à l'emplacement géographique de la requête ;
récupérer un contenu associé à l'image correspondante depuis la base de données de contenu (118) si l'emplacement géographique de l'image stockée correspond à l'emplacement géographique de la requête, sachant que le contenu comprend une vidéo d'instruction pour la configuration du dispositif (106) ; et
transmettre le contenu récupéré à l'appareil utilisateur (110, 112, 201).

2. Le serveur de contenu audiovisuel (102) d'après la revendication 1, sachant que l'emplacement géographique de l'image stockée comprend une zone de gardiennage virtuel ou encore de géoclôture (*geofencing*), et le fait de déterminer si un emplacement géographique de l'image stockée correspond à l'emplacement géographique de la requête, sachant que le au moins un processeur (232) doit déterminer si un emplacement géographique de l'image stockée est dans la zone de géoclôture.

3. Le serveur de contenu audiovisuel (102) d'après la revendication 1 ou 2, sachant que le au moins un processeur (232) identifie un sous-ensemble d'images stockées dans la base de données de contenu (118), chacune ayant une position géographique correspondant à la position géographique de l'image stockée, et détermine au moins une image correspondante du sous-ensemble pour la requête reçue.

4. Le serveur de contenu audiovisuel (102) d'après l'une quelconque des revendications précédentes, sachant que le au moins un processeur (232) reçoit des images mises en ligne, des emplacements géographiques associés pour les images mises en ligne et un contenu associé pour les images mises en ligne via un portail Web (122), et stocke les images mises en ligne, les emplacements géographiques associés et le contenu associé dans la base de données de contenu (118) ;
sachant que le serveur de contenu audiovisuel (102) peut comprendre une interface de programme d'application (245) pour recevoir la requête, sachant que la requête peut être transmise dans une requête de protocole de transfert hypertexte, et que le contenu récupéré peut être transmis au dispositif utilisateur (110, 112, 201) sous forme de réponse de protocole de transfert hypertexte.

5. Un dispositif utilisateur (110, 112, 201) pour fournir des informations de guidage à des techniciens (104), le dispositif utilisateur (110, 112, 201) comprenant :
une caméra (211) pour capturer une image d'un dispositif (106) ;
un capteur de position (220) pour déterminer une position du dispositif utilisateur (110, 112, 201) ;
une mémoire de données (204) pour stocker une application (113) et une interface de programme d'application (205) ; et
un processeur (202) pour exécuter l'application (113), sachant que l'application exécutée (113) vise à :
capturer l'image du dispositif (106) ;
déterminer, à partir du capteur de position (220), une position géographique du dispositif utilisateur (110, 112, 201) lorsque l'image de l'objet (106) est prise ;
générer une demande de contenu incluant une requête comprenant l'image du dispositif (106) et l'emplacement géographique du dispositif utilisateur (110, 112, 201);
transmettre la demande à un serveur de contenu audiovisuel (102) via l'interface de programme d'application (205), sachant que le serveur de contenu audiovisuel (102) vise à identifier une image stockée correspondant à l'image dans la requête sur la base de la comparaison de l'image dans la requête aux images stockées dans une base de données de contenu (118), à déterminer si un emplacement géographique pour l'image stockée correspond à l'emplacement géographique de la requête, et à récupérer le contenu associé à l'image correspondante depuis la base de données de contenu (118) si l'emplacement géographique pour l'image stockée correspond à l'emplacement géographique de la requête, sachant que le contenu comprend une vidéo d'instructions pour la configuration du dispositif (106) ;
recevoir via l'interface de programme d'application (205) une réponse à la demande, sachant que la réponse inclut le contenu récupéré ; et à
afficher le contenu récupéré à l'aide d'un écran (210).

6. Le dispositif utilisateur (110, 112, 201) d'après la revendication 5, sachant que l'application exécutée (113) vise à générer une interface utilisateur graphique incluant des options sélectionnables pour interroger le serveur de contenu audiovisuel (102) au sujet d'un contenu associé à l'image capturée, et pour générer une liste de lecture du contenu récupéré à partir du serveur de contenu audiovisuel (102) associé aux dispositifs situés à moins d'une distance prédéterminée de l'emplacement géographique actuel du dispositif utilisateur (110, 112, 201).

7. Le dispositif utilisateur (110, 112, 201) d'après la revendication 5 ou 6, sachant que, en réponse à la sélection de l'option pour interroger le serveur de contenu audiovisuel (102), l'application exécutée (113) doit appeler un mode de prévisualisation de la caméra (211) pour saisir l'image du dispositif (106).

8. Le dispositif utilisateur (110, 112, 201) d'après l'une quelconque des revendications de 5 à 7, sachant que, en réponse à la sélection de l'option pour générer une liste de lecture de contenu, l'application exécutée (113) doit envoyer une requête au serveur de contenu audiovisuel (102) avec la position géographique actuelle du dispositif utilisateur (110, 112, 201) pour extraire le contenu associé aux dispositifs (106) situés à moins de la distance prédéterminée de la position géographique actuelle ;
sachant que la liste de lecture peut comprendre un contenu sélectionnable destiné à être visualisé par un utilisateur (104) via le dispositif utilisateur (110, 112, 201).

9. Le dispositif utilisateur (110, 112, 201) d'après l'une quelconque des revendications de 5 à 8, sachant que les résultats de la requête comprennent au moins un contenu vidéo, audio et de réalité augmentée qui est superposé sur un flux vidéo en direct ou superposé sur un affichage d'une image en cours de capture par la caméra (211) ;
sachant que le dispositif utilisateur (110, 112, 201) peut comprendre un dispositif utilisateur portable (110) ou un smartphone (112).

10. Un procédé mis en oeuvre par ordinateur pour fournir des informations de guidage audiovisuel en temps réel aux techniciens (104), le procédé comprenant le fait de :
recevoir, par un serveur de contenu audiovisuel (102) incluant un processeur (232), un premier signal provenant d'un dispositif utilisateur (110, 112, 201), sachant que le premier signal inclut une image capturée d'un dispositif (106) et un emplacement géographique du dispositif utilisateur (110, 112, 201) déterminé lorsque l'image a été prise ;
analyser l'image capturée du dispositif (106) ;
identifier le dispositif (106) sur la base d'une comparaison de l'image analysée à une image correspondant à l'une d'une pluralité d'images de dispositifs stockés dans une base de données (118) ;
déterminer un emplacement du dispositif utilisateur (110, 112, 201) sur la base de l'emplacement géographique reçu ;
vérifier que l'emplacement du dispositif utilisateur (110, 112, 201) correspond à un emplacement associé au dispositif correspondant de la pluralité de dispositifs stockés dans la base de données (118) ; et de
transmettre un deuxième signal au dispositif utilisateur (110, 112, 201) pour la lecture, sachant que le deuxième signal inclut des informations de guidage audiovisuel comprenant une vidéo d'instruction pour une configuration du dispositif (106).

11. Le procédé d'après la revendication 10, sachant que l'emplacement associé au dispositif correspondant de la pluralité de dispositifs (106) comprend une zone de gardiennage virtuel ou encore de géoclôture (*geofencing*), et que le fait de vérifier que l'emplacement du dispositif utilisateur (110, 112, 201) correspond à un emplacement associé au dispositif correspondant de la pluralité de dispositifs stockés dans la base de données (118) comprend le fait de déterminer si l'emplacement du dispositif utilisateur (110, 112, 201) se trouve dans la zone de géoclôture du dispositif correspondant parmi la pluralité de dispositifs.

12. Le procédé d'après la revendication 10 ou 11, comprenant le fait de :
identifier un sous-ensemble d'images stockées dans une base de données de contenu (118), chacune présentant un emplacement géographique correspondant à l'emplacement du dispositif utilisateur (110, 112, 201) ; et de
identifier le dispositif (108) sur la base d'une comparaison de l'image analysée à une image correspondant à l'une des images stockées dans le sous-ensemble.

13. Le procédé d'après l'une quelconque des revendications de 10 à 12, comprenant le fait de :
recevoir une mise en ligne d'images, des emplacements géographiques associés pour les images mises en ligne et le contenu associé pour les images mises en ligne via un portail Web (122) ; et de
stocker les images mises en ligne, les emplacements géographiques associés et le contenu associé dans la base de données (118).

14. Le procédé d'après l'une quelconque des revendications de 10 à 13, sachant que le premier signal comprend une requête de protocole de transfert hypertexte incluant l'image capturée du dispositif (106) et les informations de géoclôture du dispositif utilisateur (110, 112, 201) ;
sachant que les informations de guidage audiovisuel peuvent comprendre une vidéo d'instruction pour la configuration du dispositif réseau.

15. Le procédé d'après l'une quelconque des revendications de 10 à 14, sachant que l'autre contenu comprend des informations concernant le dispositif (106) ou un contenu de réalité augmentée qui est superposé sur un flux vidéo en direct ou superposé sur un affichage d'une image en cours de capture par la caméra (211) ;
sachant que le dispositif utilisateur (110, 112, 201) peut comprendre un dispositif utilisateur portable (110) ou un smartphone (112).
